# EUROPÄISCHE PATENTANMELDUNG

(11) **EP 4 684 937 A2**
(43) Veröffentlichungstag der Anmeldung: **28.01.2026**
(21) Anmeldenummer: 25190708.5
(22) Anmeldetag: 21.07.2025
(51) Int. Cl.: B29C 45/14, B62D 55/084, F16G 13/00, B29C 45/00, B29C 45/06, B29L 31/12

(54) **VERFAHREN UND VORRICHTUNG ZUM HERSTELLEN EINES LAUFNETZES MIT WENIGSTENS EINEM VON EINEM KUNSTSTOFFKÖRPER UMSPRITZTEN KETTENSTRANG SOWIE LAUFNETZ**

(30) Priorität: 23.07.2024 DE 102024120908
(71) Anmelder: RUD Ketten Rieger & Dietz GmbH u. Co. KG, 73432 Aalen (DE)
(72) Erfinder: ARRIGONI NERI, Marco, 73432 Aalen (DE)
(74) Vertreter: Grünecker Patent- und Rechtsanwälte PartG mbB

(57) **Zusammenfassung**

Die Erfindung betrifft ein Verfahren (1) zum Herstellen wenigstens eines Abschnitts (2) eines wenigstens einen in einen Kunststoffkörper (10) eingebetteten Kettenstrang (6) aufweisenden Laufnetzes (4) einer Gleitschutzvorrichtung für ein Landfahrzeug, umfassend die Verfahrensschritte: Einlegen des Kettenstrangs in einen dem Kunststoffkörper räumlich entsprechenden Formhohlraum (8); und wenigstens abschnittsweises Umspritzen des Kettenstrangs im Formhohlraum mit Kunststoff, um den Kunststoffkörper auszuformen. Die Erfindung betrifft ferner ein mittels dieses Verfahrens hergestelltes Laufnetz sowie eine Vorrichtung zum Herstellen eines Laufnetzes einer Gleitschutzvorrichtung für ein Landfahrzeug. Mit dem erfindungsgemäßen Verfahren bzw. der Vorrichtung kann ein haltbares Laufnetz für eine Gleitschutzvorrichtung kostengünstig und effizient hergestellt werden.

## Beschreibung

Die Erfindung betrifft ein Verfahren zum Herstellen wenigstens eines Abschnitts eines Laufnetzes einer Gleitschutzvorrichtung für ein Landfahrzeug, ein mittels dieses Verfahrens hergestelltes Laufnetz sowie eine Vorrichtung zum Herstellen eines Laufnetzes einer Gleitschutzvorrichtung für ein Landfahrzeug.

Gleitschutzvorrichtungen werden üblicherweise auf ein Fahrzeugrad aufgezogen, wenn die Traktion auf rutschigem Grund wie beispielsweise Schnee, Eis oder Schlamm, nicht mehr ausreicht. Das Laufnetz einer solchen Gleitschutzvorrichtung liegt auf der Lauffläche des Reifens des Fahrzeugrades auf und erhöht die Traktion. Bekannte Gleitschutzvorrichtungen sind beispielsweise Schnee- und Schlammketten.

Laufnetze bestehen üblicherweise aus mehreren Einzelteilen, die bei der Herstellung miteinander verbunden werden müssen. Die Herstellung solcher Laufnetze erfordert dabei häufig eine Vielzahl von Produktionsschritten, die umständlich sowie nicht oder nur unzureichend automatisierbar sind. Die Herstellung bekannter Laufnetze ist daher häufig teuer und ineffizient.

Der Erfindung liegt folglich die Aufgabe zugrunde, ein Verfahren und eine Vorrichtung bereitzustellen, mit dem bzw. der eine haltbare Gleitschutzvorrichtung kostengünstig und effizient hergestellt werden kann.

Gelöst wird diese Aufgabe durch ein Verfahren zum Herstellen wenigstens eines Abschnitts eines wenigstens einen in einen Kunststoffkörper eingebetteten Kettenstrang aufweisenden Laufnetzes einer Geleitschutzvorrichtung für ein Landfahrzeug, umfassend die Verfahrensschritte:
- Einlegen des Kettenstrangs in einen dem Kunststoffkörper räumlich entsprechenden Formhohlraum; und
- wenigstens abschnittsweises Umspritzen des Kettenstrangs im Formhohlraum mit Kunststoff, um den Kunststoffkörper auszuformen.

Durch das Umspritzen des Kettenstrangs lässt sich eine stabile und dauerhafte Verbindung zwischen dem Kettenstrang und dem Kunststoffkörper erreichen. Das Umspritzen des Kettenstrangs lässt sich einfach automatisieren, wodurch das Laufnetz kostengünstig hergestellt werden kann.

Zudem lassen sich durch das Umspritzen auf einfache Weise unterschiedlichste Materialien im Kunststoffkörper kombinieren oder gegeneinander austauschen. Dies erlaubt es, den Kunststoffkörper optimal an seine jeweilige Funktion anzupassen.

Die oben genannte Lösung lässt sich durch die folgenden voneinander unabhängigen Merkmale, die jeweils für sich vorteilhaft und beliebig miteinander kombinierbar sind, weiter verbessern.

In einer Ausgestaltung kann lediglich ein Abschnitt des Kettenstrangs in den Formhohlraum eingelegt werden. Der Abschnitt des Kettenstrangs, der in den Formhohlraum eingelegt wird, kann dabei beispielsweise zwischen etwa einer Kettengliedlänge und etwa fünf Kettengliedlängen lang sein.

Gleichwohl kann wenigstens ein Abschnitt des Kettenstrangs aus dem Formhohlraum bzw. aus dem Kunststoffkörper ragen. So kann beispielsweise wenigstens ein Kettenglied, beispielsweise eine Längsseite des Kettengliedes aus dem Formhohlraum ragen. Nach dem Umspritzen des Kettenstrangs mit dem Kunststoff kann das wenigstens eine Kettenglied, beispielsweise die Längsseite des Kettengliedes aus dem Kunststoffkörper ragen.

Der wenigstens eine Kunststoffkörper kann aus wenigstens einem Kunststoff bzw. Plastikwerkstoff, wenigstens einem Gummiwerkstoff und/oder wenigstens einem gummielastischem Werkstoff gefertigt sein. Der Kunststoffkörper kann aus einem einzigen Kunststoff in einem Einkomponentenverfahren oder aus mehreren Kunststoffen in einem Mehrkomponentenverfahren gefertigt sein. Mögliche Kunststoffe sind beispielsweise Polyurethane oder Polyamide, wobei selbstverständlich auch andere Werkstoffe, wie beispielsweise PE, insbesondere HDPE, verwendet werden können.

Um den Kettenstrang in wenigstens einen weiteren Kunststoffkörper einbetten zu können, kann das Verfahren gemäß einer weiteren Ausgestaltung die folgenden weiteren Verfahrensschritte umfassen:
- Einlegen des Kettenstrangs in wenigstens einen weiteren Formhohlraum; und
- wenigstens abschnittsweises Umspritzen des Kettenstrangs in dem wenigstens einen weiteren Formhohlraum gleichzeitig mit oder nach dem wenigstens abschnittsweisen Umspritzen des Kettenstrangs im Formhohlraum.

Der wenigstens eine weitere Formhohlraum bzw. - sofern mehrere weitere Formhohlräume vorhanden sind - wenigstens einer der weiteren Formhohlräume kann die gleiche Form aufweisen wie der Formhohlraum. Insbesondere können alle Formhohlräume, also der Formhohlraum sowie der wenigstens eine weitere Formhohlraum, die gleiche Form aufweisen. Alternativ kann der Formhohlraum eine andere Form haben als der weitere Formhohlraum bzw. als wenigstens einer der weiteren Formhohlräume. In einer Ausgestaltung, in der mehrere weitere Formhohlräume vorgesehen sind, können alle weiteren Formhohlräume die gleiche Form aufweisen, die von der Form des Formhohlraums jedoch verschieden sein kann. In einer Ausgestaltung können auch alle Formhohlräume jeweils voneinander unterschiedliche Formen aufweisen.

Wenigstens einer der Formhohlräume kann wenigstens abschnittsweise abgerundet sein und/ oder wenigstens einen konvexen oder konkaven Abschnitt aufweisen.

Wenn in der vorliegenden Schrift im Plural von "Formhohlräumen" bzw. "die Formhohlräume" die Rede ist, so ist die Gesamtheit der Formhohlräume umfassend den Formhohlraum sowie alle weiteren Formhohlräume gemeint. Gleichermaßen ist, wenn in der vorliegenden Schrift unbestimmt von "einem Formhohlraum" gesprochen wird, damit ein beliebiger der Formhohlräume, also entweder der Formhohlraum oder einer der weiteren Formhohlräume bezeichnet bzw. gemeint.

Um wenigstens zwei Kettenstränge stabil und produktionstechnisch einfach miteinander verbinden zu können, kann das Verfahren die folgenden weiteren Verfahrensschritte umfassen:
- Einlegen wenigstens eines weiteren Kettenstrangs in einen Formhohlraum; und
- wenigstens abschnittsweises Umspritzen des wenigstens einen weiteren Kettenstrangs zusammen mit dem Kettenstrang in dem Formhohlraum.

Selbstverständlich können auch mehrere weitere Kettenstränge, beispielsweise zwei oder drei weitere Kettenstränge in einen Formhohlraum eingelegt werden.

Der wenigstens eine weitere Kettenstrang kann so in einen Formhohlraum eingelegt sein, dass er zumindest abschnittsweise parallel mit dem Kettenstrang in dem Formhohlraum liegt. Sind mehrere weitere Kettenstränge vorgesehen, so können die mehreren weiteren Kettenstränge zumindest abschnittsweise parallel zueinander und/oder parallel zu dem Kettenstrang verlaufen.

Der wenigstens eine weitere Kettenstrang kann sich in einem Formhohlraum zumindest abschnittsweise quer zum Kettenstrang erstrecken. Selbstverständlich kann der wenigstens eine weitere Kettenstrang auch einen stumpfen oder spitzen Winkel zum Kettenstrang aufweisen. Der wenigstens eine weitere Kettenstrang kann so eingelegt werden, dass er auf den in den Formhohlraum eingelegten Kettenstrang zuläuft. Im Falle mehrerer weiterer Kettenstränge können einige, vorzugsweise alle dieser weiteren Kettenstränge, auf den im Formhohlraum eingelegten Kettenstrang, beispielsweise sternförmig zulaufen.

Der Kettenstrang und wenigstens einer der weiteren Kettenstränge können im Formhohlraum voneinander beabstandet oder miteinander verbunden sein bzw. ein gemeinsames Kettenglied aufweisen. In einer Ausgestaltung ist der Kettenstrang im Formhohlraum von allen weiteren Kettensträngen beabstandet oder mit allen weiteren Kettensträngen verbunden bzw. weist mit allen weiteren Kettensträngen ein gemeinsames Kettenglied auf.

Wenigstens zwei der Kettenstränge können voneinander beabstandet bzw. nicht miteinander verbunden sein. Die wenigstens zwei Kettenstränge können insbesondere parallel zueinander verlaufen. Wenigstens einer der weiteren Kettenstränge kann sowohl in den Kunststoffkörper eingelegt sein, in denen der Kettenstrang eingelegt ist, als auch in den Kunststoffkörper eingelegt sein, in den ein anderer der weiteren Kettenstränge eingelegt ist.

Die Kettenstränge können beispielsweise Rundstahlkettenstränge, Profilstahlkettenstränge oder Panzerkettenstränge sein, wobei unterschiedliche Kettenformen in einem Laufnetz oder in einem Abschnitt des Laufnetzes, vorhanden sein können. Die in einen Formhohlraum eingelegten Kettenstränge können verschiedene Kettenformen aufweisen, so dass innerhalb des in diesem Formhohlraum hergestellten Kunststoffkörpers mehrere Kettenformen vorliegen.

Wenn in der vorliegenden Schrift von "Kettensträngen" bzw. "den Kettensträngen" die Rede ist, so ist die Gesamtheit der Kettenstränge umfassend den Kettenstrang sowie alle weiteren Kettenstränge gemeint. Gleichermaßen ist, wenn in der vorliegenden Schrift unbestimmt von "einem Kettenstrang" gesprochen wird, damit ein beliebiger der Kettenstränge, also entweder der Kettenstrang oder ein weiterer Kettenstrang bezeichnet bzw. gemeint.

Um den Kunststoffkörper zu versteifen und damit die Dauerfestigkeit zu verbessern, kann das Verfahren gemäß einer weiteren vorteilhaften Ausgestaltung die folgenden weiteren Verfahrensschritte umfassen:
- Einlegen wenigstens eines Einlagenelements in einen Formhohlraum, wobei das wenigstens eine Einlagenelement eine größere Festigkeit und/oder Härte als der Kunststoffkörper aufweist und von dem Kettenstrang bzw. dem wenigstens einen weiteren Kettenstrang beabstandet ist; und
- wenigstens abschnittsweises Umspritzen des wenigstens einen Einlagenelements in dem Formhohlraum zusammen mit wenigstens einem Kettenstrang.

Das wenigstens eine Einlagenelement kann so in einen Formhohlraum eingelegt sein, dass es zumindest abschnittsweise parallel zu dem Kettenstrang und/oder wenigstens einem weiteren Kettenstrang in dem Formhohlraum liegt. Ferner kann sich das wenigstens eine Einlagenelement auch zumindest abschnittsweise quer zum Kettenstrang und/oder zu wenigstens einem weiteren Kettenstrang erstrecken. Selbstverständlich kann das wenigstens eine Einlagenelement zum Kettenstrang und/oder einem weitere Kettenstrang einen stumpfen oder spitzen Winkel aufweisen. Das wenigstens eine Einlagenelement kann auf den Kettenstrang und/oder einen weiteren Kettenstrang zulaufen.

Das wenigstens eine Einlagenelement kann vollständig im Formhohlraum angeordnet sein und nach dem Umspritzen somit vollständig von dem im Formhohlraum gegossenen Kunststoffkörper eingeschlossen sein. Selbstverständlich kann das Einlagenelement jedoch auch nur abschnittsweise in den Formhohlraum eingelegt werden, wodurch nach dem Umspritzen wenigstens ein Abschnitt des Einlagenelements aus dem Kunststoffkörper ragt.

Das wenigstens eine Einlagenelement kann so in den Formhohlraum eingelegt werden, dass es auf den in den Formhohlraum eingelegten Kettenstrang und/oder einen in den Formhohlraum eingelegten weiteren Kettenstrang zuläuft.

In einer Ausgestaltung können mehrere Einlagenelemente in einen Formhohlraum eingelegt werden. Die Einlagenelemente können sich berühren oder voneinander beabstandet sein. Ferner können die Einlagenelemente quer zueinander oder zumindest abschnittsweise parallel zueinander orientiert sein.

Das Einlagenelement kann ein Traktionselement und/oder ein Versteifungselement sein. Vorzugsweise ist das Einlagenelement aus einem metallischen Werkstoff gefertigt.

Eine noch zuverlässigere und stabilere Verbindung zwischen einzelnen Kettensträngen bzw. zwischen einem Kettenstrang und dem Einlagenelement kann gemäß einem weiteren vorteilhaften Ausführungsbeispiel erzielt werden, wenn das Verfahren die folgenden weiteren Verfahrensschritte umfasst:
- Einlegen wenigstens eines Verbindungselements in einen Formhohlraum;
- Verbinden des wenigstens einen Verbindungselements mit wenigstens einem Kettenstrang und/oder Einlagenelement; und
- wenigstens abschnittsweises Umspritzen des wenigstens einen Verbindungselements in dem Formhohlraum zusammen mit wenigstens einem Kettenstrang und/oder Einlagenelement.

Vorzugsweise handelt es sich bei dem Verbindungselement um wenigstens ein Kettenglied. Das Kettenglied kann die gleiche Kettenform aufweisen wie der Kettenstrang bzw. der wenigstens eine weitere Kettenstrang. Selbstverständlich kann das Verbindungselement jedoch auch anders ausgestaltet sein und so zum Beispiel eine Öse, eine Schlaufe, einen Schäkel, einen Haken, einen Clip, einen Schenkel oder einen Ring bilden bzw. aufweisen. Das Verbindungselement ist vorzugsweise aus einem metallischen Werkstoff gefertigt.

Das wenigstens eine Verbindungselement kann vollständig oder lediglich abschnittsweise in einem Formhohlraum eingelegt sein. So kann das wenigstens eine Verbindungselement nach dem Umspritzen vollständig vom Kunststoffkörper eingeschlossen sein oder zumindest abschnittsweise aus dem Kunststoffkörper herausragen.

Das Verbinden des wenigstens einen Verbindungselements mit wenigstens einem Kettenstrang und/oder Einlagenelement kann formschlüssig, beispielsweise durch Einhängen oder Einhaken, oder stoffschlüssig, beispielsweise durch Schweißen oder Kleben, erfolgen. Selbstverständlich sind auch andere Arten des Verbindens denkbar.

Um die Bereitstellung des Kettenstrangs und damit die Produktion zu vereinfachen, kann das Verfahren gemäß einer weiteren Ausgestaltung den folgenden weiteren Verfahrensschritt vor dem Einlegen eines Kettenstrangs in einen Formhohlraum aufweisen:
- Zustellen wenigstens eines der Kettenstränge als Teil einer Endloskette.

In einer Ausgestaltung wird lediglich der Kettenstrang als Teil einer Endloskette zugestellt. Gleichwohl kann in einer anderen Ausgestaltung auch lediglich der wenigstens eine weitere Kettenstrang als Teil einer Endloskette zugestellt werden. Selbstverständlich ist es auch denkbar, dass alle Kettenstränge als Teil einer Endloskette zugestellt werden.

Unter dem Zustellen des Kettenstrangs und/oder eines weiteren Kettenstrangs kann verstanden sein, dass der Kettenstrang bzw. der weitere Kettenstrang am Formhohlraum bzw. am wenigstens einen weiteren Formhohlraum bereitgestellt wird.

In einer Ausgestaltung ist der als Teil einer Endloskette zugestellte Kettenstrang bzw. der als Teil einer Endloskette zugestellte weitere Kettenstrang derjenige Kettenstrang, der in die meisten Formhohlräume eingelegt wird bzw. der die meisten Kunststoffkörper aufweist.

Um die Produktionsgeschwindigkeit zu erhöhen und damit die Fertigungskosten zu reduzieren, kann das Einlegen des Kettenstrangs in den Formhohlraum gemäß einer weiteren vorteilhaften Ausgestaltung zumindest teilweise gleichzeitig mit dem wenigstens abschnittsweisen Umspritzen wenigstens eines weiteren Kettenstrangs in wenigstens einem weiteren Formhohlraum ablaufen.

Gemäß einer weiteren vorteilhaften Ausführungsform kann das Verfahren den folgenden weiteren Verfahrensschritt umfassen:
- Zusammensetzen wenigstens eines Formhohlraums aus wenigstens zwei Formhohlraumsegmenten.

Auf diese Weise kann das Entformen vereinfacht werden, nachdem der Kettenstrang bzw. die Kettenstränge umspritzt worden sind. Überdies kann durch einen modularen Aufbau der verwendeten Formhohlraumsegmente eine Vielzahl unterschiedlich geformter Formhohlräume bereitgestellt werden.

In einer Ausgestaltung können zwei Formhohlraumsegmente in Form eines Werkzeugformdeckels und eines Werkzeugformbodens vorgesehen sein, aus denen der Formhohlraum zusammengesetzt wird. Selbstverständlich kann der Werkzeugformdeckel bzw. der Werkzeugformboden jeweils wiederum aus Segmenten zusammensetzbar sein.

Wenigstens ein Formhohlraum kann in einer Ausführung modular aufgebaut sein. So kann wenigstens ein Formhohlraum aus Modulen zusammengesetzt sein, die beliebig miteinander kombinierbar sein können.

Um das Verfahren zumindest teilweise zu automatisieren und damit die Fertigungsgeschwindigkeit noch weiter zu erhöhen sowie die Fehleranfälligkeit des Verfahrens zu reduzieren, kann gemäß einer weiteren Ausgestaltung das Einlegen und/oder Umspritzen und/oder Zustellen und/ oder Zusammensetzen und/oder Verbinden mittels wenigstens eines Roboters erfolgen. In einer Ausgestaltung kann für das Einlegen, Umspritzen, Zustellen, Zusammensetzen und Verbinden jeweils wenigstens ein separater Roboter vorgesehen sein. Es kann jedoch auch ein einziger Roboter vorgesehen sein, der zur Ausführung aller oben genannten Verfahrensschritte ausgestaltet ist. Selbstverständlich kann auch nur ein einziger Verfahrensschritt bzw. können nur manche der Verfahrensschritte von einem Roboter oder mehreren Robotern ausgeführt werden.

Die Aufgabe wird ferner gelöst durch ein Verfahren zum Herstellen eines Laufnetzes, umfassend die folgenden Verfahrensschritte:
- Herstellen wenigstens eines Abschnitts eines Laufnetzes mittels eines oben beschriebenen erfindungsgemäßen Verfahrens; und
- Verbinden des wenigstens einen Abschnittseines Laufnetzes zu einem Laufnetz, wobei das Verbinden vorzugsweise mittels wenigstens eines Roboters erfolgt.

Auf diese Weise kann ein Laufnetz besonders einfach und kostengünstig produziert werden.

Das Verbinden des wenigstens einen Abschnitts des Laufnetzes kann zum Beispiel dadurch erfolgen, dass sich entsprechende lose Enden des wenigstens einen Abschnitts des Laufnetzes einem Formhohlraum bzw. mehreren Formhohlräumen als Kettenstränge zugeführt werden und dort wenigstens abschnittsweise mit Kunststoff umspritzt werden. Auf diese Weise können die losen Enden des wenigstens einen Abschnitts des Laufnetzes durch einen bzw. mehrere Kunststoffkörper miteinander zu einem geschlossenen Laufnetz verbunden werden.

Die Aufgabe wird ferner gelöst durch ein Laufnetz für eine Gleitschutzvorrichtung für ein Landfahrzeug, wobei das Laufnetz wenigstens einen Abschnitt eines Laufnetzes umfasst, der mittels eines oben beschriebenen erfindungsgemäßen Verfahrens hergestellt ist. Ein solches Laufnetz ist haltbar und gleichzeitig kostengünstig und effizient herstellbar.

Die Aufgabe wird weiter gelöst durch eine Vorrichtung zum Herstellen wenigstens eines Abschnitts eines wenigstens einen in einen Kunststoffkörper eingebetteten Kettenstrang aufweisenden Laufnetzes einer Gleitschutzvorrichtung für ein Landfahrzeug,
- mit einer Bestückungsstation, in der wenigstens ein Kettenstrang und/oder Einlagenelement und/oder Verbindungselement in wenigstens einen Formhohlraum einlegbar ist;
- mit einer Umspritzungsstation, in der der wenigstens eine Kettenstrang und/oder das wenigstens eine Einlagenelement und/oder Verbindungselement im wenigstens einen Formhohlraum mit Kunststoff umspritzbar ist.

Eine solche Vorrichtung ist geeignet, eine haltbare Gleitschutzvorrichtung kostengünstig herzustellen.

Die oben im Kontext des Verfahrens beschriebenen Merkmale gelten mutatis mutandis auch für die hier beschriebene Vorrichtung. Insbesondere kann die Vorrichtung dazu ausgestaltet sein, die oben beschriebenen Verfahrensschritte auszuführen.

Um die Vorrichtung kompakt zu gestalten und damit die Verfahrwege zu verkürzen, kann das Laufnetz bzw. ein Abschnitt des Laufnetzes gemäß einer vorteilhaften Ausgestaltung in der Bestückungsstation aus dem wenigstens einen Formhohlraum entnehmbar sein.

Gemäß einem weiteren vorteilhaften Ausführungsbeispiel kann die Vorrichtung eine Wechseleinrichtung aufweisen, die ausgestaltet ist, den wenigstens einen Formhohlraum zwischen der Bestückungsstation und der Umspritzungsstation zu verfahren. Der Betrieb einer derartigen Vorrichtung erfordert einen geringeren Personaleinsatz, was die Produktionskosten senkt.

Die Produktionsgeschwindigkeit kann erhöht und die Arbeitsbelastung eines die Vorrichtung bedienenden Arbeiters reduziert werden, wenn die Vorrichtung eine Zustelleinrichtung aufweist, die ausgestaltet ist, wenigstens einen Kettenstrang an der Umspritzungsstation zuzustellen. Die Zustelleinrichtung kann dabei den Kettenstrang und/oder wenigstens einen weiteren Kettenstrang an der Umspritzungsstation bereitstellen. In einer vorteilhaften Ausgestaltung werden alle Kettenstränge umfassend den Kettenstrang und alle weiteren Kettenstränge von der Zustelleinrichtung an der Umspritzungsstation zugestellt.

Synonym zu dem Begriff "zustellen" kann der Begriff "bereitstellen" verwendet sein.

Gemäß einer weiteren vorteilhaften Ausgestaltung kann die Zustelleinrichtung ausgestaltet sein, wenigstens eine Endloskette von einem Kettenreservoir zu entnehmen und den wenigstens einen Kettenstrang als Teil dieser wenigstens einen Endloskette an der Umspritzungsstation zuzustellen. Die Verwendung wenigstens einer Endloskette erleichtert die Lagerung und Handhabbarkeit der Kettenstränge. Ferner kann das Verfahren kontinuierlicher ablaufen.

Die Zustelleinrichtung kann ausgestaltet sein, alle Kettenstränge, die an der Umspritzungsstation zugestellt werden sollen, als Teil einer Endloskette zuzustellen. Die Kettenstränge können dabei Teil jeweils einer eigenen Endloskette oder Teil einer gemeinsamen Endloskette sein, die in einer Ausgestaltung bedarfsgerecht zurechtgeschnitten wird. Die Vorrichtung kann dazu eine Schneideinrichtung zum Zurechtschneiden einer Endloskette aufweisen.

Als Kettenreservoir kann beispielsweise eine Rolle, eine Walze oder eine Trommel verstanden sein, auf der wenigstens eine Endloskette aufgewickelt ist. Die Zustelleinrichtung kann dazu ausgestaltet sein, die Kettenstränge von der Rolle, der Walze bzw. der Trommel abzuwickeln. Die Zustelleinrichtung kann dazu eine bevorzugt motorisch angetriebene Abwickelvorrichtung aufweisen, die die Rolle, die Walze bzw. die Trommel dreht.

Um die Produktivität der Vorrichtung zu erhöhen, kann die Wechseleinrichtung gemäß einem weiteren vorteilhaften Ausführungsbeispiel dazu ausgestaltet sein, einen Formhohlraum von der Bestückungsstation zur Umspritzungsstation und wenigstens teilweise gleichzeitig wenigstens einen anderen Formhohlraum von der Umspritzungsstation zur Bestückungsstation zu bewegen. In einer besonders vorteilhaften Ausgestaltung erfolgt die Bewegung des Formhohlraums von der Bestückungsstation zur Umspritzungsstation vollständig gleichzeitig mit der Bewegung des wenigstens einen anderen Formhohlraums von der Umspritzungsstation zur Bestückungsstation.

Der wenigstens eine andere Formhohlraum kann dem wenigstens einen weiteren Formhohlraum, der weiter oben eingeführt worden ist, entsprechen.

Gemäß einer weiteren vorteilhaften Ausgestaltung kann die Wechseleinrichtung einen Drehtisch umfassen, auf dem der wenigstens eine Formhohlraum anordenbar ist, und wobei der wenigstens eine Formhohlraum durch Drehung des Drehtischs zwischen der Bestückungsstation und der Umspritzungsstation verfahrbar ist. Eine derartige Wechseleinrichtung ist konstruktiv einfach umzusetzen. Insbesondere kann ein Antrieb der Wechseleinrichtung leicht realisiert werden, indem die Drehbewegung eines Motors unmittelbar oder über ein Getriebe auf den Drehtisch übertragen wird.

Gemäß einer weiteren Ausführungsform können sich die Umspritzungsstation und die Bestückungsstation in Bezug auf eine Drehachse des Drehtischs diametral gegenüberliegen. Sind auf dem Drehtisch zwei Formhohlräume angeordnet, die sich in Bezug auf eine Drehachse des Drehtischs ebenfalls diametral gegenüberliegen, so kann durch Drehung des Drehtischs um 180° erreicht werden, dass der eine der beiden Formhohlräume von der Umspritzungsstation zur Bestückungsstation und gleichzeitig der andere der beiden Formhohlräume von der Bestückungsstation zur Umspritzungsstation bewegt wird. Durch diese Gleichzeitigkeit wird die Produktivität der Vorrichtung auf technisch einfache Weise erhöht.

Um die Vorrichtung zumindest teilweise zu automatisieren und damit die Produktionskosten zu senken, kann bzw. können die Bestückungsstation und/oder die Umspritzungsstation und/oder die Wechseleinrichtung und/oder die Zustelleinrichtung gemäß einer weiteren vorteilhaften Ausgestaltung einen Roboter aufweisen. In einer Ausgestaltung kann für die Bestückungsstation und/oder die Umspritzungsstation und/oder die Wechseleinrichtung und/oder die Zustelleinrichtung jeweils wenigstens ein separater Roboter vorgesehen sein. Alternativ kann auch ein einziger Roboter für wenigstens zwei, vorzugsweise jedoch für alle der Stationen bzw. Einrichtungen vorgesehen sein.

Im Folgenden ist die Erfindung anhand von Ausführungsbeispielen mit Bezug auf die beigefügten Figuren näher erläutert. Dabei können einzelne, im nachstehenden Ausführungsbeispiel vorhandene Merkmale weggelassen werden, wenn es nach Maßgabe der obigen Ausführungsformen auf den mit diesem Merkmal verknüpften technischen Effekt nicht ankommen sollte. Umgekehrt kann ein oben beschriebenes, aber bei einem nachstehenden Ausführungsbeispiel nicht vorhandenes Merkmal dem Ausführungsbeispiel hinzugefügt werden, wenn es bei einer bestimmten Anwendung auf den mit diesem Merkmal verknüpften technischen Effekt ankommen sollte.

Im Folgenden sind für Elemente, die einander hinsichtlich Struktur und/oder Funktion entsprechen, dieselben Bezugszeichen verwendet.

Es zeigen:
- Fig. 1: eine schematische Darstellung eines Verfahrens gemäß einem möglichen Ausführungsbeispiel;
- Fig. 2: eine weitere schematische Darstellung des Verfahrens aus Fig. 1,
- Fig. 3: eine schematische Darstellung eines Verfahrens gemäß einem weiteren möglichen Ausführungsbeispiel;
- Fig. 4: eine weitere schematische Darstellung des Verfahrens aus Fig. 3,
- Fig. 5: eine schematische Darstellung eines Verfahrens gemäß noch einem weiteren möglichen Ausführungsbeispiel;
- Fig. 6: eine weitere schematische Darstellung des Verfahrens aus Fig. 5,
- Fig. 7: eine schematische Darstellung eines Verfahrens gemäß einem weiteren Ausführungsbeispiel;
- Fig. 8: eine weitere schematische Darstellung des Verfahrens aus Fig. 7,
- Fig. 9: eine schematische Darstellung eines Verbindungselements gemäß einem möglichen Ausführungsbeispiel,
- Fig. 10: eine schematische Darstellung eines Verfahrens gemäß noch einem weiteren möglichen Ausführungsbeispiel;
- Fig. 11: eine weitere schematische Darstellung des Verfahrens aus Fig. 10,
- Fig. 12: eine schematische Darstellung eines Laufnetzes gemäß einem möglichen Ausführungsbeispiel;
- Fig. 13: eine schematische Darstellung eines Verfahrens gemäß einem weiteren Ausführungsbeispiel,
- Fig. 14: eine weitere schematische Darstellung des Verfahrens aus Fig. 13;
- Fig. 15: eine schematische Darstellung einer Vorrichtung gemäß einem möglichen Ausführungsbeispiel,
- Fig. 16: eine schematische Darstellung einer Vorrichtung gemäß einem weiteren möglichen Ausführungsbeispiel,
- Fig. 17: eine schematische Darstellung einer Vorrichtung gemäß noch einem weiteren möglichen Ausführungsbeispiel; und
- Fig. 18: eine schematische Darstellung eines Details des Laufnetzes aus Fig. 12.

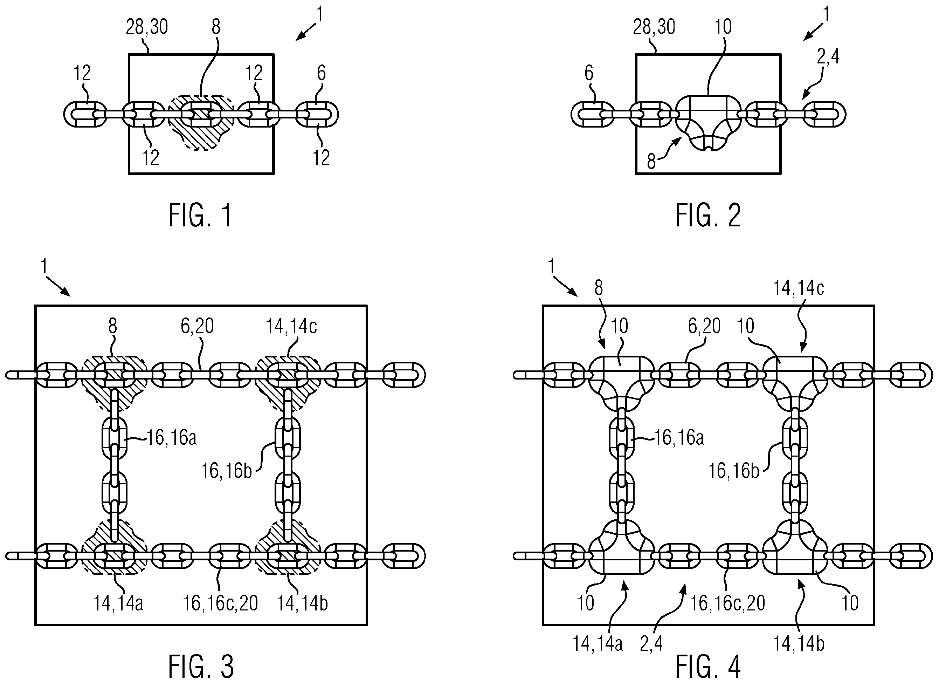

Fig. 1 und 2 zeigen ein Verfahren 1 zum Herstellen wenigstens eines Abschnitts 2 eines Laufnetzes 4. In Fig. 1 ist ein Kettenstrang 6 und ein Formhohlraum 8 zu sehen, der im dargestellten Ausführungsbeispiel rein beispielhaft in einem Boden 30 einer Werkzeugform 28 angeordnet ist.

Im gezeigten Ausführungsbeispiel ist der Kettenstrang 6 als Rundstahlkettenstrang ausgestaltet. Es können jedoch auch andere Kettenformen wie zum Beispiel Profilstahlkettenstränge oder Panzerkettenstränge Anwendung finden.

In einem Verfahrensschritt wird der Kettenstrang 6 in den Formhohlraum 8 eingelegt. Der Formhohlraum 8 weist eine Form auf, die dem am Kettenstrang 6 auszuformenden Kunststoffkörper 10 räumlich entspricht. Im vorliegenden Ausführungsbeispiel ist der Formhohlraum 8 gewölbt, so dass der ausgeformte Kunststoffkörper 10 ebenfalls gewölbt ist.

Im vorliegenden Ausführungsbeispiel besteht der Kettenstrang 6 aus einer Mehrzahl miteinander verbundener Kettenglieder 12. Von der Mehrzahl von Kettengliedern 12 werden im in Fig. 1 dargestellten Ausführungsbeispiel lediglich einige in den Formhohlraum 8 eingelegt.

Wie in Fig. 2 gezeigt ist, wird der Kettenstrang 6, der in den Formhohlraum 8 eingelegt ist, in einem weiteren Verfahrensschritt mit einem Kunststoff umspritzt, so dass der Kunststoffkörper 10 ausgeformt wird. Dadurch entsteht ein Abschnitt 2 eines Laufnetzes 4, der im dargestellten Ausführungsbeispiel einen einzigen Kettenstrang 6 aufweist, der abschnittsweise in einen einzigen Kunststoffkörper 10 eingebettet ist.

Der Kunststoffkörper 10 kann aus wenigstens einem Plastikwerkstoff, wenigstens einem Gummiwerkstoff und/oder wenigstens einem gummielastischem Werkstoff gefertigt sein. Zudem kann der Kunststoffkörper 10 aus einem einzigen Kunststoff in einem Einkomponentenverfahren oder aus mehreren Kunststoffen in einem Mehrkomponentenverfahren gefertigt sein. Mögliche Kunststoffe sind beispielsweise Polyurethane oder Polyamide, wobei selbstverständlich auch andere Werkstoffe, wie beispielsweise PE, insbesondere HDPE, verwendet werden können.

In Fig. 3 und 4 ist ein Verfahren 1 zum Herstellen eines Abschnitts 2 des Laufnetzes 4 gemäß einem weiteren Ausführungsbeispiel dargestellt. Im in Fig. 3 gezeigten Ausführungsbeispiel ist der Formhohlraum 8 sowie drei weitere Formhohlräume 14 gezeigt, so dass insgesamt vier Formhohlräume 8, 14 existieren. Die Formhohlräume 8, 14 weisen alle die gleiche Form auf, die wie im ersten Ausführungsbeispiel der Form der auszuformenden Kunststoffkörper 10 entspricht. Selbstverständlich können in anderen Ausgestaltungen jedoch auch mehr oder weniger weitere Formhohlräume 14 vorgesehen sein. So kann in einer Ausgestaltung beispielsweise lediglich ein einziger weiterer Formhohlraum 14 vorhanden sein, so dass insgesamt zwei Formhohlräume 8, 14 existieren. Gleichwohl können in einer anderen Ausgestaltung beispielsweise neun weitere Formhohlräume 14 und somit insgesamt 10 Formhohlräume 8, 14 vorgesehen sein. Die Formhohlräume 8, 14 müssen dabei nicht die gleiche Form aufweisen, sondern können auch voneinander verschieden ausgestaltet sein. Auf diese Weise kann die Herstellung verschiedentlich geformter Kunststoffkörper 10 realisiert werden.

Im in Fig. 3 gezeigten Ausführungsbeispiel sind neben dem Kettenstrang 6 zusätzlich drei weitere Kettenstränge 16 und somit insgesamt vier Kettenstränge 6, 16 vorhanden.

In einem Verfahrensschritt wird der Kettenstrang 6 in den Formhohlraum 8 und in einem weiteren Verfahrensschritt in einen der weiteren Formhohlräume 14 eingelegt, so dass der Kettenstrang 6 insgesamt in zwei Formhohlräume 8, 14 eingelegt ist. Das Einlegen des Kettenstrangs 6 in den Formhohlraum 8 kann, muss aber nicht gleichzeitig mit dem Einlegen des Kettenstrangs 6 in den einen der weiteren Formhohlräume 14 ablaufen.

In einem weiteren Verfahrensschritt werden die weiteren Kettenstränge 16 zumindest abschnittsweise in die Formhohlräume 8, 14 eingelegt. Im vorliegenden Ausführungsbeispiel wird ein erster weiterer Kettenstrang 16, 16a beispielsweise in den Formhohlraum 8 sowie in einen ersten weiteren Formhohlraum 14, 14a eingelegt. Ein zweiter weiterer Kettenstrang 16, 16b, der sich im vorliegenden Ausführungsbeispiel parallel zum ersten weiteren Kettenstrang 16, 16a erstreckt, wird in einen zweiten und einen dritten weiteren Formhohlraum 14, 14b, 14c eingelegt. Ein dritter weiterer Kettenstrang 16, 16c, der sich im dargestellten Ausführungsbeispiel parallel zu dem Kettenstrang 6 erstreckt, wird schließlich sowohl in den ersten als auch in den zweiten weiteren Formhohlraum 14, 14a, 14b eingelegt.

Selbstverständlich können die Kettenstränge 6, 16 in anderen Ausgestaltungen auch gänzlich anders angeordnet sein. So kann in einer Ausgestaltung in wenigstens einem Formhohlraum beispielsweise lediglich ein Kettenstrang 6, 16 eingelegt sein, oder es können mehr als zwei, beispielsweise drei oder fünf Kettenstränge 6, 16 in einen Formhohlraum 8, 14 eingelegt sein.

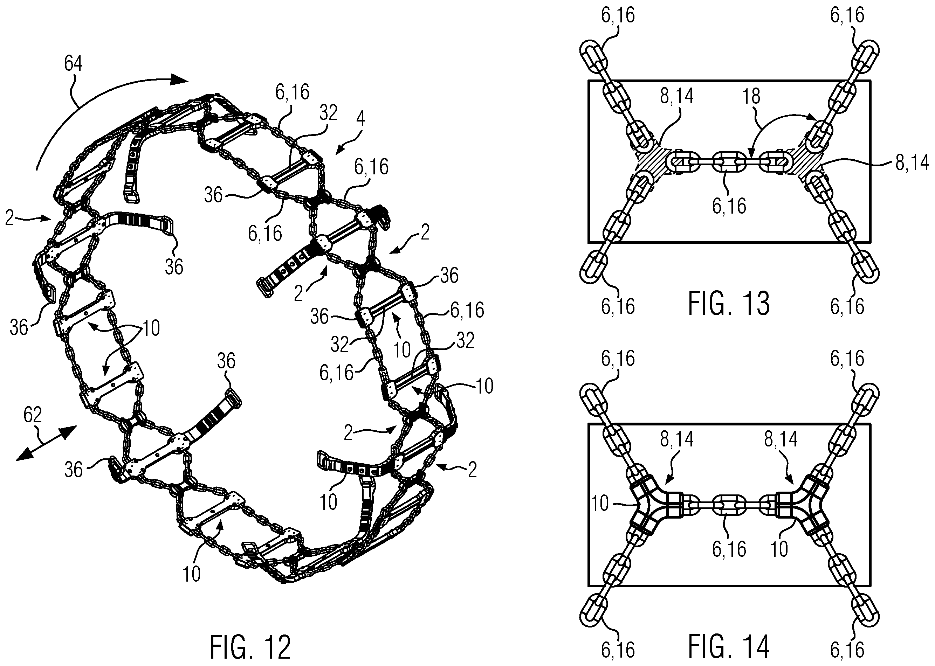

Im in Fig. 3 und 4 dargestellten Ausführungsbeispiel sind zwei Kettenstränge 6, 16, die in einem gemeinsamen Formhohlraum 8, 14 eingelegt sind, quer zueinander orientiert. Hierdurch ergibt sich, wie aus Fig. 3 ersichtlich ist, eine rechteckige Anordnung der Kettenstränge 6, 16. Selbstverständlich sind der Anordnung der Kettenstränge 6, 16 aber kaum Grenzen gesetzt. So können zwei oder mehr Kettenstränge 6, 16, die in einem gemeinsamen Formhohlraum 8, 14 eingelegt sind, auch zumindest abschnittsweise parallel angeordnet sein oder beispielsweise einen stumpfen oder spitzen Winkel 18 zueinander aufweisen. Gleichwohl können, wenn eine Mehrzahl von Kettensträngen 6, 16 in einem gemeinsamen Formhohlraum 8, 14 eingelegt ist, manche dieser Kettenstränge 6, 16 zumindest abschnittsweise parallel zueinander verlaufen, während andere dieser Kettenstränge 6, 16 spitzwinklig, stumpfwinklig oder rechtwinklig zueinander verlaufen. Auf diese Weise kann der hergestellte Abschnitt 2 des Laufnetzes 4 nahezu beliebig gestaltet werden. So zeigt die in Fig. 13 gezeigte Ausgestaltung beispielsweise zwei Formhohlräume 8, 14 sowie mehrere Kettenstränge 6, 16, die so in die Formhohlräume 8, 14 eingelegt werden, dass sie in den Formhohlräumen 8, 14 aufeinander zu laufen. Jeweils zwei benachbarte Kettenstränge 6, 16 eines gemeinsamen Formhohlraums 8, 14 weisen im dargestellten Ausführungsbeispiel einen stumpfen Winkel 18 zueinander auf. Indem die Kettenstränge 6, 16 in den Formhohlräumen 8, 14 umspritzt werden, ergibt sich der in Fig. 14 gezeigte Abschnitt 2 eines Laufnetzes 4, der die fünf Kettenstränge 6, 16 sowie zwei ausgeformte Kunststoffkörper 10, in denen die Kettenstränge 6, 16 eingebettet sind, aufweist.

Wie aus Fig. 4 ersichtlich ist, werden in einem weiteren Verfahrensschritt die Kettenstränge 6, 16 in dem jeweiligen Formhohlraum 8, 14, in dem sie eingelegt sind, mit Kunststoff umspritzt, wodurch die Kunststoffkörper 10 ausgeformt werden. Im Ausführungsbeispiel gemäß Fig. 4 wird der Kettenstrang 6 folglich zusammen mit dem ersten weiteren Kettenstrang 16, 16a im Formhohlraum 8 und zusammen mit dem zweiten weiteren Kettenstrang 16, 16b im dritten weiteren Formhohlraum 14, 14c umspritzt. Es sei erwähnt, dass das Umspritzen des Kettenstrangs 6 im Formhohlraum 8 gleichzeitig oder nach dem Umspritzen des weiteren Kettenstrangs 16 im wenigstens einen weiteren Formhohlraum 14, hier dem dritten Formhohlraum 14c, ablaufen kann.

Analog wird im in Fig. 4 dargestellten Ausführungsbeispiel der erste weitere Kettenstrang 16, 16a mit dem dritten weiteren Kettenstrang 16, 16c im ersten weiteren Formhohlraum 14, 14a umspritzt und der zweite weitere Kettenstrang 16, 16b wird mit dem dritten weiteren Kettenstrang 16, 16c im zweiten weiteren Formhohlraum 14, 14b umspritzt. Es ergibt sich ein im Wesentlichen rechteckiger Abschnitt 2 des Laufnetzes 4 mit vier Kettensträngen 6, 16, die jeweils in einen Kunststoffkörper 10 eingebettet und damit innig und zuverlässig miteinander verbunden sind.

Das Einlegen des Kettenstrangs 6 in den Formhohlraum 8 kann gleichzeitig oder wenigstens teilweise gleichzeitig mit dem Umspritzen eines der weiteren Kettenstränge 16 in einem weiteren Formhohlraum 14 ablaufen.

So kann beispielsweise das Einlegen des Kettenstrangs 6 in den Formhohlraum 8 gleichzeitig mit dem Umspritzen des zweiten weiteren Kettenstrangs 16, 16b im zweiten weiteren Formhohlraum 14, 14b ablaufen.

Bei dem Verfahren 1 des in den Fig. 3 und 4 gezeigten Ausführungsbeispiels werden zwei der Kettenstränge 6, 16 als Teil jeweils einer Endloskette 20 zugestellt. Insbesondere werden der Kettenstrang 6 und der dritte weitere Kettenstrang 16, 16c als Teil jeweils einer Endloskette 20 zugestellt. Selbstverständlich können in anderen Ausgestaltungen alle Kettenstränge 6, 16 als Teil jeweils einer Endloskette 20 zugestellt werden oder lediglich ein Kettenstrang 6, 16 bzw. einer der Kettenstränge 6, 16 kann als Teil einer Endloskette 20 zugestellt werden.

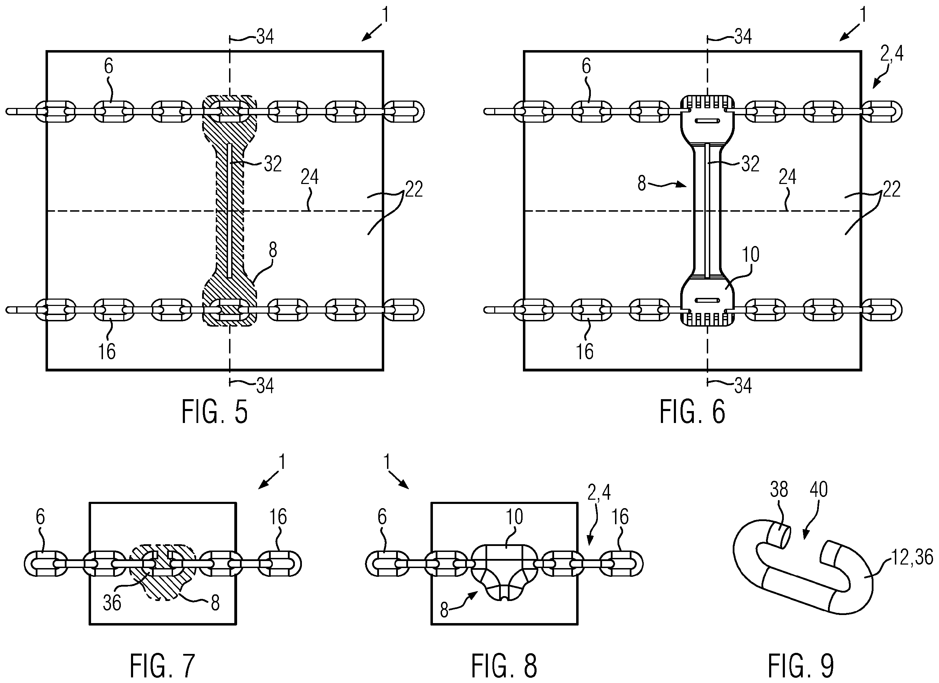

Anhand der Fig. 5 und 6 wird im Folgenden ein Verfahren 1 zur Herstellung eines Abschnitts 2 eines Laufnetzes 4 gemäß einer weiteren Ausgestaltung beschrieben. Im dargestellten Ausführungsbeispiel ist der Kettenstrang 6 sowie ein weiterer Kettenstrang 16 bereitgestellt, die hier rein beispielhaft parallel zueinander verlaufen. Der Formhohlraum 8 weist eine längliche, leistenförmige Form auf, die, wie in den anderen Ausführungsbeispielen, der Form des herzustellenden Kunststoffkörpers 10 räumlich entspricht. Der Formhohlraum 8 des in den Fig. 5 und 6 dargestellten Ausführungsbeispiels besteht aus zwei Formhohlraumsegmenten 22, die in einem eigenen Verfahrensschritt zusammengesetzt werden. Eine Schnittstelle 24, an der die Formhohlraumsegmente 22 aufeinandertreffen bzw. aneinander liegen, ist in Fig. 5 und 6 rein schematisch durch eine gestrichelte Linie angedeutet. Selbstverständlich könnte der Formhohlraum 8 auch aus mehr Formhohlraumsegmenten 22 zusammengesetzt sein. In einer Ausgestaltung kann ein Formhohlraumsegment 22 einem Deckel einer Werkzeugform und ein anderes Formhohlraumsegment 22 einem Boden dieser Werkzeugform entsprechen.

In der in den Fig. 5 und 6 dargestellten Ausgestaltung ist ein Einlagenelement 32 vorgesehen, das eine größere Festigkeit und/oder Härte als der Kunststoffkörper 10 aufweist. Vorzugsweise ist das Einlagenelement 32 aus einem metallischen Werkstoff gefertigt. Es sind jedoch auch andere Werkstoffe denkbar, solange die Festigkeit und/oder Härte des Einlagenelements 32 größer ist als die des herzustellenden Kunststoffkörpers 10 bzw. der herzustellenden Kunststoffkörper 10. Selbstverständlich können in anderen Ausgestaltungen auch mehrere, beispielsweise zwei oder drei Einlagenelemente 32 vorgesehen sein. Dabei können sich wenigstens zwei Einlagenelemente 32 in einem Formhohlraum 8, 14 beispielsweise zumindest abschnittsweise quer, parallel, spitzwinklig oder stumpfwinklig zueinander erstrecken.

In einem Verfahrensschritt werden der Kettenstrang 6 sowie der weitere Kettenstrang 16 in den Formhohlraum 8 eingelegt. Im vorliegenden Ausführungsbeispiel erstrecken sich die Kettenstränge 6, 16 parallel zueinander und senkrecht zu einer Längsachse 34 des Formhohlraums 8. In einem weiteren Verfahrensschritt wird das Einlagenelement 32 ebenfalls in den Formhohlraum 8 eingelegt. Das Einlegen des Einlagenelements 32 kann, muss aber nicht gleichzeitig mit dem Einlegen wenigstens eines der Kettenstränge 6, 16 in den Formhohlraum 8 erfolgen. Das Einlagenelement 32 ist im Formhohlraum 8 stets von den Kettensträngen 6, 16 beabstandet.

In einem weiteren Verfahrensschritt wird das Einlagenelement 32 wenigstens abschnittsweise zusammen mit den Kettensträngen 6, 16 umspritzt. Im in Fig. 5 und 6 dargestellten Ausführungsbeispiel wird das Einlagenelement 32 nicht vollständig von dem Kunststoff umspritzt, so dass es mit einer Kante aus dem Kunststoffkörper 10 herausragt. Auf diese Weise kann das Einlagenelement 32 beispielsweise als Traktionselement für eine Gleitschutzvorrichtung dienen. In anderen Ausgestaltungen kann das Einlagenelement 32 jedoch auch vollständig umspritzt sein, so dass es vollständig in dem Kunststoffkörper 10 aufgenommen ist.

Anhand der Fig. 7 und 8 wird im Folgenden ein Verfahren 1 zur Herstellung eines Abschnitts 2 eines Laufnetzes 4 gemäß einer weiteren Ausführungsform beschrieben. Im dargestellten Ausführungsbeispiel ist der Kettenstrang 6 sowie ein weiterer Kettenstrang 16 dargestellt, die in den Formhohlraum 8 eingelegt werden. Im in Fig. 7 dargestellten Ausführungsbeispiel wird zusätzlich zu den Kettensträngen 6, 16 in einem Verfahrensschritt wenigstens ein Verbindungselement 36, in diesem Ausführungsbeispiel genau ein Verbindungselement 36, in den Formhohlraum 8 eingelegt. Das Verbindungselement 36 ist dazu ausgestaltet, mit wenigstens einem Kettenstrang 6, 16 und/oder mit wenigstens einem Einlagenelement 32 (in der vorliegenden Ausgestaltung nicht vorhanden) verbunden zu werden. Das Verbindungselement 36 kann, wie aus Fig. 9 ersichtlich ist, beispielsweise ein Kettenglied 12 sein oder ein solches aufweisen. Das in Fig. 9 dargestellte Kettenglied 12 weist an einer Längsseite 38 eine Lücke 40 auf, über die ein Kettenstrang 6, 16 bzw. ein Einlagenelement 32 eingehängt werden kann. Selbstverständlich kann das Verbindungselement 36 auch anders ausgestaltet sein und so zum Beispiel eine Öse, einen Schäkel, eine Schlaufe, einen Haken, einen Clip, einen Schenkel oder einen Ring bilden bzw. aufweisen. Wie das wenigstens eine Einlagenelement 32 ist auch das wenigstens eine Verbindungselement 36 vorzugsweise aus einem metallischen Werkstoff gefertigt.

In einem weiteren Verfahrensschritt wird das wenigstens eine Verbindungselement 36 mit wenigstens einem Kettenstrang 6, 16 und/oder Einlagenelement 32 verbunden. Im vorliegenden Ausführungsbeispiel, in dem lediglich zwei Kettenstränge 6, 16 und kein Einlagenelement 32 vorgesehen sind, werden beide Kettenstränge 6, 16 mit dem Verbindungselement 36 und somit miteinander verbunden. Das Verbinden muss nicht durch Einhängen bzw. Einhaken des Verbindungselements 36 in die Kettenstränge 6, 16 erfolgen, sondern kann in anderen Ausgestaltungen auch stoffschlüssig, beispielsweise durch Schweißen oder Kleben, erfolgen.

In einem weiteren Verfahrensschritt wird das Verbindungselement 36 zusammen mit beiden Kettensträngen 6, 16 wenigstens abschnittsweise in dem Formhohlraum 8 umspritzt. Im vorliegenden Ausführungsbeispiel ist das Verbindungselement 36 vollständig im Formhohlraum 8 aufgenommen, so dass es nach dem Umspritzen mit dem Kunststoff vollständig vom Kunststoffkörper 10 umschlossen ist. In anderen Ausgestaltungen kann das Verbindungselement 36 auch lediglich abschnittsweise umspritzt sein, so dass es aus dem Kunststoffkörper 10 ragt. Wird ein Kettenglied 12 als Verbindungselement 36 verwendet, so kann beispielsweise eine Längsseite 38 des Kettengliedes 12 aus dem Kunststoffkörper 10 ragen. Auf diese Weise kann das Verbindungselement 36 beispielsweise verwendet werden, um die Traktion einer Gleitschutzvorrichtung zu erhöhen und/oder die Befestigung weiterer Elemente am Verbindungselement 36 zu ermöglichen.

Selbstverständlich können in anderen Ausgestaltungen auch mehrere Verbindungselemente 36 in den Formhohlraum 8 eingelegt werden und, sofern wenigstens ein Einlagenelement 32 vorhanden ist, kann wenigstens eines der Verbindungselemente 36 mit dem wenigstens einen Einlagenelement 32 verbunden und mit diesem wenigstens abschnittsweise zusammen im Formhohlraum 8 umspritzt werden.

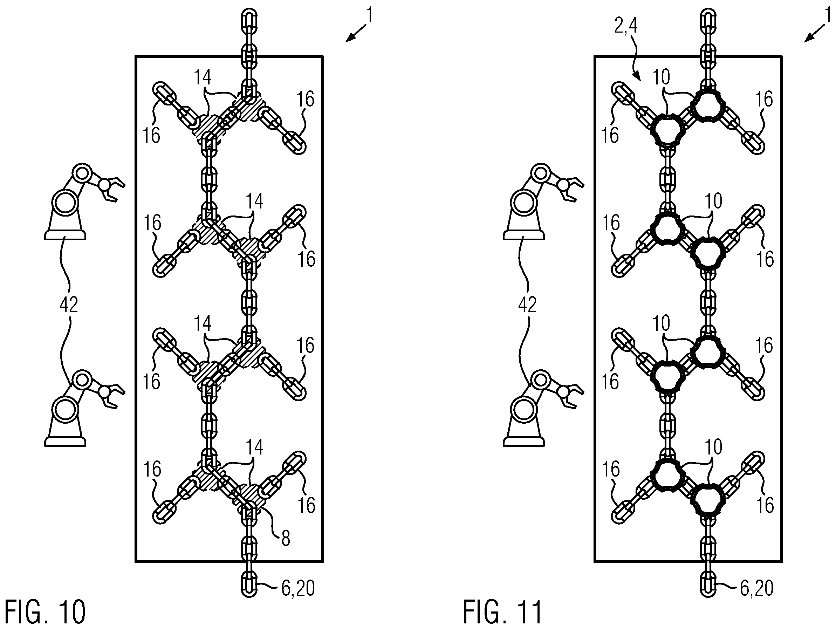

Anhand der Fig. 10 und 11 wird im Folgenden kurz ein Verfahren 1 zur Herstellung eines Abschnitts 2 eines Laufnetzes 4 gemäß einer weiteren vorteilhaften Ausgestaltung beschrieben. Im in Fig. 10 und 11 dargestellten Ausführungsbeispiel wird der Kettenstrang 6 als Teil einer Endloskette 20 zugestellt und in den Formhohlraum 8 sowie in sieben weitere Formhohlräume 14 eingelegt. Der Kettenstrang 6 wird folglich in insgesamt acht Formhohlräume 8, 14 eingelegt. In einem weiteren Verfahrensschritt werden acht weitere Kettenstränge 16 in jeweils einen der insgesamt acht Formhohlräume 8, 14 eingelegt. Anschließend werden die jeweils in einen Formhohlraum 8, 14 eingelegten Kettenstränge 6, 16 in dem jeweiligen Formhohlraum 8, 14 zumindest abschnittsweise mit Kunststoff umspritzt, so dass ein Abschnitt 2 eines Laufnetzes 4 mit neun Kettensträngen 6, 16 hergestellt wird, von denen jeder in wenigstens einem Kunststoffkörper 10 eingebettet ist.

Bei der in Fig. 10 und 11 beschriebenen Ausführungsform des Verfahrens 1 sind ferner Roboter 42 vorgesehen, mittels derer das Einlegen der Kettenstränge 6, 16 in die Formhohlräume 8, 14, das Zustellen des Kettenstrangs 6 als Teil einer Endloskette 20, sowie das Umspritzen der Kettenstränge 6, 16 in den Formhohlräumen 8, 14 durchgeführt werden kann. In Ausgestaltungen, in denen wenigstens ein Einlagenelement 32 und/oder Verbindungselement 36 vorgesehen ist, kann das Einlegen des wenigstens einen Einlagenelements 32 bzw. Verbindungselements 36, das Verbinden des wenigstens einen Verbindungselements 36 mit wenigstens einem Kettenstrang 6, 16 und/oder Einlagenelement 32 und/oder das Umspritzen des wenigstens einen Einlagenelements 32 bzw. Verbindungselements 36 mittels wenigstens eines Roboters 42 erfolgen. Bei Ausgestaltungen, in denen ein Formhohlraum 8, 14 aus Formhohlraumsegmenten 22 besteht, kann das Zusammensetzen der Formhohlraumsegmente 22 ebenfalls mithilfe wenigstens eines Roboters 42 erfolgen. In einer besonders vorteilhaften Ausgestaltung ist lediglich ein einziger Roboter 42 vorgesehen, der zur Ausführung aller oben beschriebenen Verfahrensschritte ausgestaltet ist.

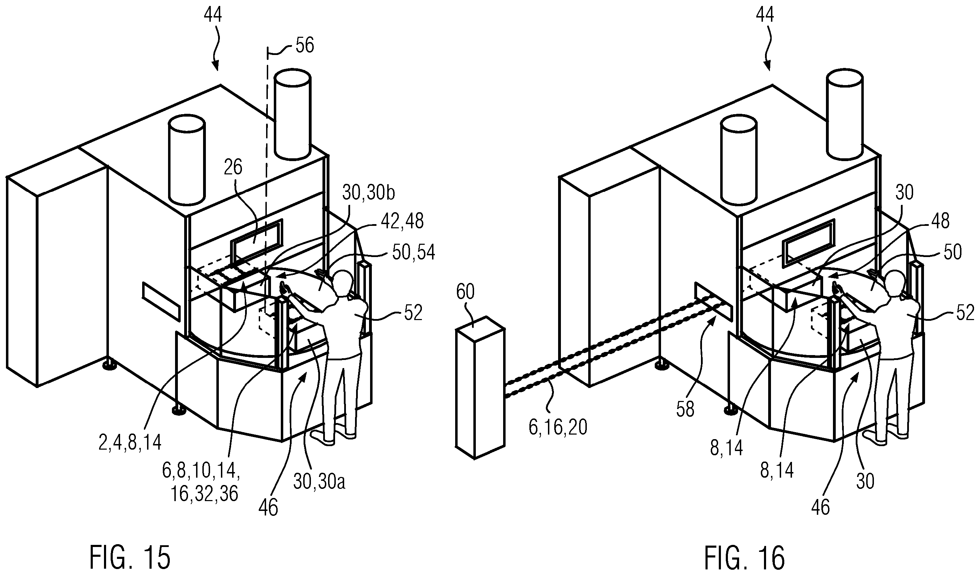

Im Folgenden sind verschieden ausgestaltete Vorrichtungen 44 zum Herstellen wenigstens eines Abschnitts 2 eines Laufnetzes 4 mit Bezug auf die Fig. 15 bis 17 rein beispielhaft beschrieben.

Die Vorrichtung 44 gemäß dem in Fig. 15 gezeigten Ausführungsbeispiel weist eine Bestückungsstation 46, eine Umspritzungsstation 48 und eine Wechseleinrichtung 50 auf.

In der Bestückungsstation 46 kann wenigstens ein Kettenstrang 6, 16 und/oder Einlagenelement 32 und/oder Verbindungselement 36 in einen Formhohlraum 8, 14 eingelegt werden. Im dargestellten Ausführungsbeispiel ist die Bestückungsstation 46 für einen Arbeiter 52 zugänglich, so dass dieser wenigstens einen Kettenstrang 6, 16 und/oder wenigstens ein Einlagenelement 32 und/oder Verbindungselement 36 in einen Formhohlraum 8, 14 einlegen kann. In der in Fig. 15 gezeigten Ausgestaltung kann der mit der Vorrichtung 44 hergestellte Abschnitt 2 eines Laufnetzes 4 bzw. ein Laufnetz 4 in der Bestückungsstation 46 aus dem wenigstens einen Formhohlraum 8, 14 zudem entnehmbar sein. Auch das Entnehmen wird im dargestellten Ausführungsbeispiel von dem Arbeiter 52 durchgeführt.

In der Umspritzungsstation 46 kann der wenigstens eine Kettenstrang 6, 16 und/oder das wenigstens eine Einlagenelement 32 und/oder Verbindungselement 36 in einem Hohlraum 8, 14 mit Kunststoff umspritzbar sein, um den wenigstens einen Kunststoffkörper 10 herzustellen. Im in Fig. 15 dargestellten Ausführungsbeispiel weist die Umspritzungsstation 48 einen Roboter 42 auf, mittels dessen das Umspritzen automatisiert ist.

Die Wechseleinrichtung 50 ist dazu ausgestaltet, Formhohlräume 8, 14 zwischen der Bestückungsstation 46 und der Umspritzungsstation 48 zu verfahren. In der in Fig. 15 gezeigten Ausführungsform weist die Wechseleinrichtung 50 einen Drehtisch 54 auf, auf dem zwei Formhohlräume 8, 14 angeordnet sind, die sich diametral gegenüberliegen. Im dargestellten Ausführungsbeispiel sind die Formhohlräume 8, 14 jeweils Bestandteil separater Werkzeugformböden 30. Durch Drehung des Drehtischs 54 um eine Drehachse 56 können die Werkzeugformböden 30 bzw. die Formhohlräume 8, 14 zwischen der Umspritzungsstation 48 und der Bestückungsstation 46 verfahren werden. Im in Fig. 15 gezeigten Ausführungsbeispiel liegen sich die Umspritzungsstation 48 und die Bestückungsstation 46 in Bezug auf die Drehachse 56 des Drehtischs 54 diametral gegenüber. Da sich auch die Formhohlräume 8, 14 auf dem Drehtisch 54 diametral gegenüberliegen, kann durch eine 180°-Drehung des Drehtischs 54 um seine Drehachse 56 der eine der beiden Formhohlräume 8, 14 von der Umspritzungsstation 48 zur Bestückungsstation 46 und gleichzeitig der andere der beiden Formhohlräume 8, 14 von der Bestückungsstation 46 zur Umspritzungsstation 48 verfahren werden.

Im Folgenden ist kurz der Betrieb der Vorrichtung 44 gemäß der in Fig. 15 gezeigten Ausgestaltung erläutert.

Zu Beginn befindet sich ein erster Werkzeugformboden 30, 30a mit wenigstens einem Formhohlraum 8, 14 in der Bestückungsstation 46, während sich ein zweiter Werkzeugformboden 30, 30b mit wenigstens einem Formhohlraum 8, 14 in der Umspritzungsstation befindet. Zunächst wird der sich in der Bestückungsstation 46 befindliche erste Werkzeugformboden 30, 30a vom Arbeiter 52 bestückt, indem wenigstens ein Kettenstrang 6, 16 und/oder Einlagenelement 32 und/oder Verbindungselement 36 in den wenigstens einen Formhohlraum 8, 14 des ersten Werkzeugformbodens 30, 30a eingelegt wird. Im Anschluss verfährt die Wechseleinrichtung 50, 54 den ersten Werkzeugformboden 30, 30a von der Bestückungsstation 46 zur Umspritzungsstation 48, während der zweite Werkzeugformboden 30, 30b von der Umspritzungsstation 48 zur Bestückungsstation 46 bewegt wird. Während der wenigstens eine Kettenstrang 6, 16 und/oder das wenigstens eine Einlagenelement 32 und/oder Verbindungselement 36 im wenigstens einen Formhohlraum 8, 14 des ersten Werkzeugformbodens 30, 30a in der Umspritzungsstation 48 umspritzt wird, kann der Arbeiter 52 gleichzeitig den zweiten Werkzeugformboden 30, 30b, der sich nun in der Bestückungsstation 46 befindet, bestücken. Eventuell muss dem zweiten Werkzeugformboden 30, 30b ein fertig hergestellter Abschnitt 2 eines Laufnetzes 4 bzw. ein fertig hergestelltes Laufnetz 4 entnommen werden, bevor der zweite Werkzeugboden 30, 30b bestückt wird. Die Umspritzungsstation 48 kann einen Werkzeugformdeckel 26 aufweisen, durch den die Werkzeugformböden 30, 30a, 30b vor dem Umspritzen zu einer Werkzeugform geschlossen werden.

Dann wiederholt sich der Prozess analog: die Wechseleinrichtung 50 bzw. der Drehtisch 54 verfährt den zweiten Werkzeugformboden 30, 30b von der Bestückungsstation 46 zur Umspritzungsstation 48, während der erste Werkzeugformboden 30, 30a von der Umspritzungsstation 48 zur Bestückungsstation 46 bewegt wird. Während der wenigstens eine Kettenstrang 6, 16 und/oder das wenigstens eine Einlagenelement 32 und/oder Verbindungselement 36 im wenigstens einen Formhohlraum 8, 14 des zweiten Werkzeugformbodens 30, 30b in der Umspritzungsstation 48 umspritzt wird, kann der Arbeiter 52 den ersten Werkzeugformboden 30, 30a erneut bestücken, nachdem er den fertig hergestellten Abschnitt 2 des Laufnetzes 4 bzw. ein fertig hergestelltes Laufnetz 4 aus dem ersten Werkzeugformboden 30, 30a entnommen hat.

Die Vorrichtung 44 gemäß dem in Fig. 16 gezeigten Ausführungsbeispiel umfasst neben der Bestückungsstation 46, der Umspritzungsstation 48 und der Wechseleinrichtung 50 zusätzlich eine Zustelleinrichtung 58. Die Zustelleinrichtung 58 ist dazu ausgestaltet, wenigstens einen Kettenstrang 6, 16 an der Umspritzungsstation 48 zuzustellen. Im vorliegenden Ausführungsbeispiel umfasst die Vorrichtung 44 ein Kettenreservoir 60, in dem Endlosketten 20 gelagert sind. Das Kettenreservoir 60 kann beispielsweise eine Rolle oder eine Walze aufweisen, auf der die Endlosketten 20 aufgewickelt sind. Die Zustelleinrichtung 58 ist im in Fig. 16 gezeigten Ausführungsbeispiel dazu ausgestaltet, die Endlosketten 20 von dem Kettenreservoir 60 zu entnehmen, beispielsweise abzuwickeln, und an der Umspritzungsstation 48 zuzustellen. Unter dem Begriff "Zustellen" kann auch ein "Bereitstellen" verstanden sein.

Im Ausführungsbeispiel gemäß Fig. 16 wird der wenigstens eine Kettenstrang 6, 16 nicht in der Bestückungsstation 48 bereitgestellt und von dem Arbeiter 52 in den wenigstens einen Formhohlraum 8, 14 eines Werkzeugformbodens 30 eingelegt, sondern der wenigstens eine Kettenstrang 6, 16 wird in der Umspritzungsstation 48 in den wenigstens einen Formhohlraum 8, 14 eines Werkzeugformbodens 30 eingelegt. Gemäß anderen Ausgestaltungen kann sowohl wenigstens ein Kettenstrang 6, 16 von der Zustelleinrichtung 58 an der Umspritzungsstation 48 zugestellt werden, als auch wenigstens ein Kettenstrang 6, 16 in der Bestückungsstation 46 bereitgestellt bzw. eingelegt werden.

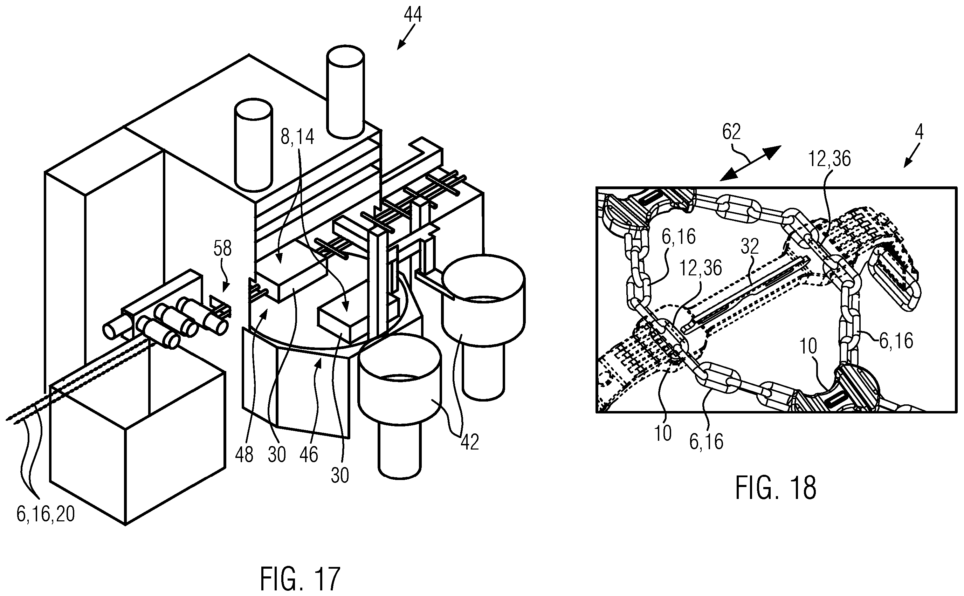

Die Vorrichtung 44 gemäß dem in Fig. 17 gezeigten Ausführungsbeispiel entspricht im Wesentlichen der in Fig. 16 gezeigten Ausführungsform der Vorrichtung 44. Allerdings weist die Bestückungsstation 46 der in Fig. 17 dargestellten Vorrichtung 44 Roboter 42 auf, die den Arbeiter zumindest teilweise ersetzen. Die Roboter 42 der Bestückungsstation 46 sind in der in Fig. 17 gezeigten Ausführungsform dazu ausgestaltet, den wenigstens einen Formhohlraum 8, 14 eines Werkzeugformbodens 30 mit dem wenigstens Einlagenelement 32 und/oder dem wenigstens einen Verbindungselement 36 zu bestücken (das wenigstens eine Einlagenelement 32 bzw. Verbindungselement 36 ist in Fig. 17 nicht gezeigt). Der Roboter 42 kann ausgestaltet sein, den wenigstens einen Formhohlraum 8, 14 eines Werkzeugformbodens 30 mit wenigstens einem Kettenstrang 6, 16 zu bestücken. Allerdings werden die Kettenstränge 6, 16 im in Fig. 17 gezeigten Ausführungsbeispiel von der Zustelleinrichtung 58 als Teil zweier Endlosketten 20 an der Umspritzungsstation 48 zugestellt.

Abschließend ist ein Laufnetz 4, das mittels eines oben beschriebenen Verfahrens 1 und/oder mit einer oben beschriebenen Vorrichtung 44 hergestellt ist, rein exemplarisch mit Bezug auf die Fig. 12 und 18 kurz beschrieben. Das dargestellte Laufnetz 4 umfasst eine Vielzahl von Abschnitten 2, die Kettenstränge 6, 16 und Kunststoffkörper 10 aufweisen. Manche der Abschnitte 2 weisen zudem Einlagenelemente 32 und/oder Verbindungselemente 36 auf. Die Kettenstränge 6, 16 erstrecken sich im Wesentlichen entlang einer Umfangsrichtung 64 des Laufnetzes 4 und sind über mehrere Kunststoffkörper 10, von denen die Kettenstränge 6, 16 abschnittsweise umspritzt sind, miteinander verbunden. Wie die Detailansicht in Fig. 18 zeigt, sind die Kettenstränge 6, 16 innerhalb der Kunststoffkörper 10 über Verbindungselemente 36, die hier beispielhaft als Kettenglieder 12 ausgestaltet sind, verbunden. Die Einlagenelemente 32, die sich entlang einer Axialrichtung 62 erstrecken, sind nicht vollständig von den Kunststoffkörpern 10 umspritzt, sondern ragen aus den Kunststoffkörpern 10 heraus. Auf diese Weise können die Einlagenelemente 32 beispielsweise als Traktionselemente einer Gleitschutzvorrichtung dienen.

### Bezugszeichen

- 1: Verfahren
- 2: Abschnitt eines Laufnetzes
- 4: Laufnetz
- 6: Kettenstrang
- 8: Formhohlraum
- 10: Kunststoffkörper
- 12: Kettenglied
- 14: weiterer Formhohlraum
- 14a: erster weiterer Formhohlraum
- 14b: zweiter weiterer Formhohlraum
- 14c: dritter weiterer Formhohlraum
- 16: weiterer Kettenstrang
- 16a: erster weiterer Kettenstrang
- 16b: zweiter weiterer Kettenstrang
- 16c: dritter weiterer Kettenstrang
- 18: Winkel
- 20: Endloskette
- 22: Formhohlraumsegment
- 24: Schnittstelle
- 26: Werkzeugformdeckel
- 28: Werkzeugform
- 30: Werkzeugformboden
- 30a: erster Werkzeugformboden
- 30b: zweiter Werkzeugformboden
- 32: Einlagenelement
- 34: Längsachse des Formhohlraums
- 36: Verbindungselement
- 38: Längsseite des Kettenglieds
- 40: Lücke
- 42: Roboter
- 44: Vorrichtung
- 46: Bestückungsstation
- 48: Umspritzungsstation
- 50: Wechseleinrichtung
- 52: Arbeiter
- 54: Drehtisch
- 56: Drehachse des Drehtischs
- 58: Zustelleinrichtung
- 60: Kettenreservoir
- 62: Axialrichtung
- 64: Umfangsrichtung

## Patentansprüche

1. Verfahren (1) zum Herstellen wenigstens eines Abschnitts (2) eines wenigstens einen in einen Kunststoffkörper (10) eingebetteten Kettenstrang (6) aufweisenden Laufnetzes (4) einer Gleitschutzvorrichtung für ein Landfahrzeug, umfassend die Verfahrensschritte:
- Einlegen des Kettenstrangs (6) in einen dem Kunststoffkörper (10) räumlich entsprechenden Formhohlraum (8); und
- wenigstens abschnittsweises Umspritzen des Kettenstrangs (6) im Formhohlraum (8) mit Kunststoff, um den Kunststoffkörper (10) auszuformen.

2. Verfahren (1) nach Anspruch 1, umfassend die weiteren Verfahrensschritte:
- Einlegen des Kettenstrangs (6) in wenigstens einen weiteren Formhohlraum (14); und
- wenigstens abschnittsweises Umspritzen des Kettenstrangs (6) in dem wenigstens einen weiteren Formhohlraum (14) gleichzeitig mit oder nach dem wenigstens abschnittsweisen Umspritzen des Kettenstrangs (6) im Formhohlraum (8).

3. Verfahren (1) nach Anspruch 1 oder 2, umfassend die weiteren Verfahrensschritte:
- Einlegen wenigstens eines weiteren Kettenstrangs (16) in einen Formhohlraum (8, 14); und
- wenigstens abschnittsweises Umspritzen des wenigstens einen weiteren Kettenstrangs (16) zusammen mit dem Kettenstrang (6) in dem Formhohlraum (8, 14).

4. Verfahren (1) nach einem der Ansprüche 1 bis 3, umfassend die weiteren Verfahrensschritte:
- Einlegen wenigstens eines Einlagenelements (32) in einen Formhohlraum (8, 14), wobei das wenigstens eine Einlagenelement (32) eine größere Festigkeit und/oder Härte als der Kunststoffkörper (10) aufweist und von dem Kettenstrang (6) bzw. dem wenigstens einen weiteren Kettenstrang (16) beabstandet ist; und
- wenigstens abschnittsweises Umspritzen des wenigstens einen Einlagenelements (32) in dem Formhohlraum (8, 14) zusammen mit wenigstens einem Kettenstrang (6, 16).

5. Verfahren (1) nach einem der Ansprüche 1 bis 4, umfassend die weiteren Verfahrensschritte:
- Einlegen wenigstens eines Verbindungselements (36) in einen Formhohlraum (8, 14);
- Verbinden des wenigstens einen Verbindungselements (36) mit wenigstens einem Kettenstrang (6, 16) und/oder Einlagenelement (32); und
- wenigstens abschnittsweises Umspritzen des wenigstens einen Verbindungselements (36) in dem Formhohlraum (8, 14) zusammen mit wenigstens einem Kettenstrang (6, 16) und/oder Einlagenelement (32).

6. Verfahren (1) nach einem der Ansprüche 1 bis 5, umfassend den weiteren Verfahrensschritt vor dem Einlegen eines Kettenstrangs (6, 16) in einen Formhohlraum (8, 14):
- Zustellen wenigstens eines der Kettenstränge (6, 16) als Teil einer Endloskette (20).

7. Verfahren (1) nach einem der Ansprüche 1 bis 6,
wobei das Einlegen des Kettenstrangs (6) in den Formhohlraum (8) zumindest teilweise gleichzeitig mit dem wenigstens abschnittsweisen Umspritzen wenigstens eines weiteren Kettenstrangs (16) in wenigstens einem weiteren Formhohlraum (14) abläuft.

8. Verfahren (1) nach einem der Ansprüche 1 bis 7, umfassend den weiteren Verfahrensschritt:
- Zusammensetzen wenigstens eines Formhohlraums (8, 14) aus wenigstens zwei Formhohlraumsegmenten (22).

9. Verfahren zum Herstellen eines Laufnetzes (4), umfassend die folgenden Verfahrensschritte:
- Herstellen wenigstens eines Abschnitts (2) eines Laufnetzes (4) mittels eines Verfahrens (1) gemäß einem der Ansprüche 1 bis 8; und
- Verbinden des wenigstens einen Abschnitts (2) eines Laufnetzes (4) zu einem Laufnetz (4), wobei das Verbinden vorzugsweise mittels wenigstens eines Roboters (42) erfolgt.

10. Laufnetz (4) für eine Gleitschutzvorrichtung für ein Landfahrzeug, wobei das Laufnetz (4) wenigstens einen Abschnitt (2) eines Laufnetzes (4) umfasst, der mittels eines Verfahrens (1) nach einem der Ansprüche 1 bis 8 hergestellt ist.

11. Vorrichtung (44) zum Herstellen wenigstens eines Abschnitts (2) eines wenigstens einen in einen Kunststoffkörper (10) eingebetteten Kettenstrang (6, 16) aufweisenden Laufnetzes (4) einer Gleitschutzvorrichtung für ein Landfahrzeug,
- mit einer Bestückungsstation (46), in der wenigstens ein Kettenstrang (6, 16) und/oder Einlagenelement (32) und/oder Verbindungselement (36) in wenigstens einen Formhohlraum (8, 14) einlegbar ist;
- mit einer Umspritzungsstation (48), in der der wenigstens eine Kettenstrang (6, 16) und/oder das wenigstens eine Einlagenelement (32) und/oder Verbindungselement (36) im wenigstens einen Formhohlraum (8, 14) mit Kunststoff umspritzbar ist.

12. Vorrichtung (44) nach Anspruch 11,
mit einer Wechseleinrichtung (50), die ausgestaltet ist, den wenigstens einen Formhohlraum (8, 14) zwischen der Bestückungsstation (46) und der Umspritzungsstation (48) zu verfahren.

13. Vorrichtung (44) nach Anspruch 11 oder 12,
mit einer Zustelleinrichtung (58), die ausgestaltet ist, wenigstens einen Kettenstrang (6, 16) an der Umspritzungsstation (48) zuzustellen.

14. Vorrichtung (44) nach Anspruch 13,
wobei die Zustelleinrichtung (58) ausgestaltet ist, wenigstens eine Endloskette (20) von einem Kettenreservoir (60) zu entnehmen und den wenigstens einen Kettenstrang (6, 16) als Teil dieser wenigstens einen Endloskette (20) an der Umspritzungsstation (48) zuzustellen.

15. Vorrichtung (44) nach einem der Ansprüche 12 bis 14,
wobei die Wechseleinrichtung (50) ausgestaltet ist, einen Formhohlraum (8, 14) von der Bestückungsstation (46) zur Umspritzungsstation (48) und wenigstens teilweise gleichzeitig wenigstens einen anderen Formhohlraum (8, 14) von der Umspritzungsstation (48) zur Bestückungsstation (46) zu bewegen.

16. Vorrichtung (44) nach einem der Ansprüche 12 bis 15,
wobei die Wechseleinrichtung (50) einen Drehtisch (54) umfasst, auf dem der wenigstens eine Formhohlraum (8, 14) anordenbar ist, und wobei der wenigstens eine Formhohlraum (8, 14) durch Drehung des Drehtischs (54) zwischen der Bestückungsstation (46) und der Umspritzungsstation (48) verfahrbar ist.

17. Vorrichtung (44) nach Anspruch 16,
wobei sich die Umspritzungsstation (48) und die Bestückungsstation (46) in Bezug auf eine Drehachse (56) des Drehtischs (54) diametral gegenüberliegen.

18. Vorrichtung (44) nach einem der Ansprüche 11 bis 17,
wobei die Bestückungsstation (46) und/oder die Umspritzungsstation (48) und/oder die Wechseleinrichtung (50) und/oder die Zustelleinrichtung (58) einen Roboter (42) aufweist bzw. aufweisen.
